# EUROPÄISCHE PATENTSCHRIFT

(11) **EP 1 454 187 B1**
(45) Veröffentlichungstag und Bekanntmachung des Hinweises auf die Patenterteilung: **13.10.2010**
(21) Anmeldenummer: 02785295.3
(22) Anmeldetag: 24.10.2002
(51) Int. Cl.: G03B 21/62

(54) **PROJEKTIONSSCHIRM FÜR DIE BILDPROJEKTION**
PROJECTOR SCREEN FOR IMAGE PROJECTION
ECRAN DE PROJECTION DESTINE A LA PROJECTION D'IMAGES

(30) Priorität: 12.12.2001 DE 10160947
(43) Veröffentlichungstag der Anmeldung: 08.09.2004
(73) Patentinhaber: Rheinmetall Defence Electronics GmbH, 28309 Bremen (DE)
(72) Erfinder: PLASS, Wilfried, 28205 Bremen (DE)
(74) Vertreter: Thul, Hermann
(86) Internationale Anmeldenummer: PCT/EP2002/011893
(87) Internationale Veröffentlichungsnummer: WO 2003/054624

(56) Entgegenhaltungen:
- EP-A1- 1 152 286
- DE-U- 20 111 288
- JP-A- 11 133 508
- JP-A- 2000 206 620
- US-A- 4 083 626
- US-A1- 2001 021 065

## Beschreibung

Die Erfindung betrifft einen Projektionsschirm für die Bildprojektion der im Oberbegriff des Anspruchs 1 definierten Gattung.

Bei einem insbesondere für die Durchlichtprojektion mit Laserlicht verwendeten Projektionsschirm (DE 101 18 662.2 -51) wurde bereits vorgeschlagen, die lichstreuende Schicht direkt auf den plattenförmigen Träger aufzubringen und für die hierzu erforderliche Beschichtung des Trägers volumenstreuendes Material zu verwenden, um eine Reduktion der sog. Speckle zu erreichen.

Bei einem solchen Projektionsschirm zeigt sich - wie aber auch bei sonst üblichen Projektionsschirmen für Durchlichtprojektion - eine Verschlechterung des Bildkontrastes und der Bildauflösung durch eine sog. Korona-oder Hofbildung. Dieser Effekt wird dadurch ausgelöst, daß von der lichtstreuenden Schicht gestreutes Licht auf die gegenüberliegende Seite des Trägers gelangt und dort teilweise unter einem Winkel zur Normalen auftrifft, der größer ist als der Grenzwinkel der Totalreflexion. Das hier reflektierte Streulicht gelangt zurück auf die bilderzeugende Seite und erzeugt an Hell/Dunkel-Übergängen bzw. an Farbübergängen einen Vorhof, die sog. Korona, der die Verschlechterung von Bildauflösung und Bildkontrast bewirkt. Die laterale Reichweite dieses Effekts, d.h. die Breite des Vorhofs, wächst mit der Dicke des beschichteten Trägers, da die Ausbreitungsstrecke des Lichtes entsprechend zunimmt.

Aus der US-A-4083626 ist ein Projektionsschirm für die Bildproduktion bekannt, der einen Schirmgeometrie festlegenden transparenten Träger und eine lichtstreuende Schicht aufweist, die mindestens eine innerhalb der Schirmgeometrie definierte Projektionsfläche überdeckt. Die lichtstreuende Schicht ist als Beschichtung einer sehr dünnen transparenten Folie ausgeführt, und die Folie ist an dem Träger befestigt. Es werden so die mechanischen Eigenschaften der Schicht verbessert, ohne eine Beeinträchtigung der optischen Eigenschaften hinzunehmen.

Aus den japanischen Patentveröffentlichungen JP 2000 206620 A und JP 11133508 A sind Bildschirme bekannt, die in ihrem Aufbau Luftspalte mit anderer Aufgabe und Funktion enthalten.

Der Erfindung liegt die Aufgabe zugrunde, einen Projektionsschirm der eingangs genannten Art in Hinblick auf eine Reduzierung der Koronabildung zu verbessern.

Die Aufgabe ist durch die Merkmale des Anspruchs 1 gelöst.

Der erfindungsgemäße Projektionsschirm hat den Vorteil, daß durch die optische Entkopplung des bilderzeugenden Teils des Projektionsschirms von dem statisch tragenden Teil des Projektionsschirms die Ausbreitungs- oder Propagationstrecke des für die Koronabildung verantwortlichen, auf die Bildebene zurückreflektierten Streulichts extrem klein gemacht werden kann, ohne daß die mechanische Stabilität und Steifigkeit des Projektionsschirms dadurch leidet. Entsprechend dieser nur durch die Dicke und den Brechungsindex der Folie bestimmten, geringen Wegstrecke ist die laterale Reichweite des reflektierten Streulichts in der Bildebene sehr klein, so daß die Breite des sich bildenden Vorhofs um die Bildpunkte extrem reduziert ist. Dadurch ist der Koronaeffekt für das Auge des Beobachters nicht oder nur noch stark reduziert wahrnehmbar.

Gemäß der Erfindung ist zur optischen Entkopplung der Folie und des der Befestigung der Folie dienenden, transparenten Trägers voneinander zwischen beiden ein Luftspalt vorgesehen.

Zur Bildung des Luftspalts zwischen dem eigensteifen Träger und der wenig steifen Folie ist eine Stützstellenstruktur angeordnet, an der zumindest die Folie punktuell anliegt.

Zweckmäßige Ausführungsformen des erfindungsgemäßen Projektionsschirms mit vorteilhaften Weiterbildungen und Ausgestaltungen der Erfindung ergeben sich aus den weiteren Ansprüchen.

Gemäß einer vorteilhaften Ausführungsform ist die Stützstellenstruktur so ausgebildet, daß das Verhältnis der Summe ihrer Stützflächen zu der Summe der dazwischen liegenden Freiflächen sehr klein ist, z.B. weniger als 5 % beträgt. Zwar kommt es an den Stützstellen immer noch zu einem Lichttransport in den transparenten Träger, jedoch ist der Anteil des transportierten Lichtes infolge des vorstehend genannte Verhältnisses so gering, daß eine effektive optische Entkopplung erreicht wird. Hinzu kommt, daß der verbleibende Lichttransport durch die Stützstellen nur mit einem stark eingeschränktem Winkelspektrum stattfindet, was zu einer weiteren Reduktion des störenden Koronaeffekts führt, da dieser nur durch Einfallswinkel des gestreuten Lichtes hervorgerufen wird, die oberhalb des Grenzwinkels der Totalreflexion liegen.

Gemäß einer vorteilhaften Ausführungsform der Erfindung sind die Folie und der transparente Träger randseitig aneinander befestigt, wozu vorzugsweise ein transparenter Kleber verwendet wird. Zur Verbesserung der Haftung der Folie auf dem Träger können zusätzliche Klebekontakte zwischen Stützstellenstruktur und Folie bzw. Träger vorgesehen werden. Allerdings besteht dabei ein Optimierungsbedarf hinsichtlich der Auswahl des Klebers und hinsichtlich der Größe und Dichte der Stützstellen, damit die durch den Luftspalt erreichte optische Entkopplung nicht wieder teilweise aufgehoben wird.

Gemäß einer bevorzugten Ausführungsform der Erfindung wird die Stützstellenstruktur mittels kleiner, transparenter Kugeln realisiert, die über die einander zugekehrten Flächen von Folie und Träger möglichst gleichmäßig verteilt angeordnet sind und die Folie am Träger abstützen. Die Kugeln sind dabei vorzugsweise in einer auf den Träger oder auf die Folie aufgetragenen Lackschicht aus transparentem Lack festgelegt, wobei die Dicke des Lackauftrags kleiner gehalten wird als der Durchmesser der Kugeln. Alternativ sind andere Stützstellenstrukturen möglich, z.B. Prägefolien, wie sie von Herstellern in der Verpackungsindustrie angeboten werden, oder Strukturen auf Basis eines eine Mikrostruktur erzeugenden Lacks.

Gemäß einer vorteilhaften Ausführungsform der Erfindung ist die Folie thermoplastisch verformbar ausgebildet. Dadurch können sphärisch gekrümmte Projektionsschirme realisiert werden. In diesem Fall bietet sich für die Stützstellenstruktur zur Abstützung der beschichteten Folie an dem transparenten Träger besonders die Verwendung eines mit transparenten Kugeln angereicherten Lacks an.

Die Erfindung ist anhand eines in der Zeichnung dargestellten Ausführungsbeispiels im folgenden näher beschrieben. Es zeigen in schematischer Darstellung:
- Fig. 1: ausschnittweise ein Projektionssystem für die Bildprojektion im Durchlichtverfahren,
- Fig. 2: ausschnittweise einen vergrößerten Schnitt des Projektionsschirms im Projektionssystem in Fig. 1 gemäß Schnittlinie II - II.

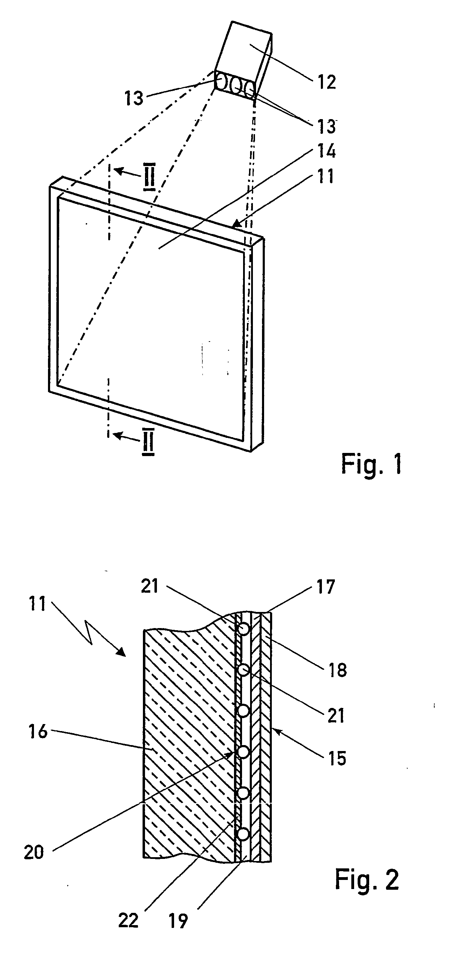

Das in Fig. 1 in perspektivischer Darstellung schematisch skizzierte Projektionssystem weist einen Projektionsschirm 11 sowie ein dem Projektionsschirm zugeordnetes Projektionsgerät 12 mit drei Projektoren für die Grundfarben rot, blau und grün auf, die entweder über separate Objektive 13 oder aber auch über ein gemeinsames Objektiv auf den Projektionsschirm 11 gerichtet sind und dort eine Projektionsfläche 14 beleuchten. Die Bildprojektion erfolgt im Ausführungsbeispiel als sog. Durchlichtprojektion, d. h., daß sich der Projektionsschirm 11 zwischen einem Betrachter und dem Projektionsgerät 12 befindet.

In Fig. 2 ist ausschnittweise der Aufbau des Projektionsschirms 11 im Schnittbild zu sehen. Er besteht aus einem die Schirmgeometrie festlegenden, transparenten, scheiben- oder plattenförmigen Träger 16, der die mechanische Stabilität und Steifigkeit des Projektionsschirms 11 bestimmt, und einem wenig steifen Bilderzeugungsteil 15, der sich mindestens über die Projektionsfläche 14 erstreckt und an dem Träger 16 festgelegt ist. Der Bilderzeugungsteil 15 kann dabei auf der dem Projektionsgerät 12 zugekehrten Seite des Trägers 16, wie dies in Fig. 2 dargestellt ist, oder auf der vom Projektionsgerät 12 abgekehrten Seite des Trägers 16 angeordnet sein.

Der Bilderzeugungsteil 15 besteht aus einer sehr dünnen, transparenten Folie 17, die mit einer Beschichtung 18 aus einem lichtstreuenden Material überzogen ist. Die Folie 17 ist an dem Träger 16 so befestigt, daß sie gegenüber dem Träger 16 optisch entkoppelt ist, d. h. so am Träger 16 befestigt ist, daß der Träger 16 keine oder nur eine geringfügige, optische Rückkopplung auf die Beschichtung 18 hat. Diese optische Entkopplung wird in einfacher Weise durch einen Luftspalt 19 erzielt, der sich mit annähernd konstanter Breite über die einander zugekehrten Flächen von Träger 16 und Folie 17 erstreckt.

Zur Bildung dieses Luftspaltes 19 zwischen Träger 16 und Folie 17 ist zwischen diesen beiden eine optisch transparente Stützstellenstruktur 20 angeordnet, an der zumindest die Folie 17 punktuell anliegt. Die Stützstellenstruktur 20 ist so ausgebildet, daß das Verhältnis der Summe ihrer Stützflächen zu der Summe der dazwischen verbleibenden Freiflächen recht klein ist, z.B. weniger als 5 % beträgt. Die Folie 17 ist randseitig an dem Träger 16 befestigt, wozu vorzugsweise ein transparenter Kleber verwendet wird. Der umlaufende Kleberand liegt dabei vorzugsweise außerhalb der Projektionsfläche 14. Alternativ oder zusätzlich können transparente Klebekontakte zwischen den Stützstellen der Stützstellenstruktur 20 und der Folie 17 bzw. dem Träger 16 vorgesehen werden, wodurch die Haftung der Folie 17 auf dem Träger 16 verbessert wird. Allerdings muß dabei darauf geachtet werden, daß in dem Bereich zwischen den einzelnen Stützstellen die optische Entkopplung nicht wieder aufgehoben wird.

In dem in Fig. 2 dargestellten Ausführungsbeispiel ist die Stützstellenstruktur 20 mittels kleiner, transparenter Kugeln 21 realisiert, die über die einander zugekehrten Flächen von Folie 17 und Träger 16 möglichst gleichmäßig verteilt angeordnet sind und die Folie 17 am Träger 16 abstützen. Die Kugeln 21 sind in einer auf dem Träger 16 aufgetragenen Lackschicht 22 aus transparentem Lack festgelegt, wobei die Dicke der Lackschicht 22 kleiner ist als der Durchmesser der Kugeln 21. Alternativ kann die Lackschicht 22 auf die Folie 17 aufgebracht werden.

Soll anstelle eines ebenen Projektionsschirms 11, wie er in Fig. 1 dargestellt ist, oder eines zylindrisch gekrümmten Projektionsschirm 11 ein sphärisch gekrümmter Projektionsschirm 11 in der beschriebenen Weise aufgebaut werden, so ist für den Bilderzeugungsteil 15 eine thermoplastisch verformbare Folie 17 zu verwenden, die der durch den Träger 16 vorgegebenen sphärischen Krümmung formtreu angepaßt werden kann. Bei einem sphärisch gekrümmten Projektionsschirm 11 ist der beschriebene Aufbau der Stützstellenstruktur 20 mit transparenten Kugeln 21 und transparenter Lackschicht 22 besonders vorteilhaft, da sie sich problemlos an jede vom Träger 16 vorgegebene Form anpaßt.

## Patentansprüche

1. Projektionsschirm für die Bildprojektion, mit einem die Schirmgeometrie festlegenden transparenten Träger (16) und mit einer lichtstreuenden Schicht, die mindestens eine innerhalb der Schirmgeometrie definierte Projektionsfläche (14) überdeckt, wobei die lichtstreuende Schicht als Beschichtung (18) einer sehr dünnen, transparenten Folie (17) ausgeführt ist, **dadurch gekennzeichnet dass** die Folie (17) an dem Träger über eine optisch transparente Stützstellenstruktur (20) befestigt ist, die einen Luftspalt (19) zwischen dem Träger (16) und der Folie (17) bildet, wobei zumindest die Folie (17), vorzugsweise die Folie (17) und der Träger (16), an der Stützstellenstruktur punktuell anliegt, wodurch die Folie (17) an dem Träger (16) so befestigt ist, dass durch optische Entkopplung der Träger (16) keine oder nur eine geringfügige optische Rückkopplung auf die Beschichtung (18) hat.

2. Projektionsschirm nach Anspruch 1, **dadurch gekennzeichnet, daß** die Stützstellenstruktur (20) so ausgebildet ist, daß das Verhältnis der Summe ihrer Stützflächen zu der Summe der dazwischen verbleibenden Freiflächen kleiner 5% ist.

3. Projektionsschirm nach Anspruch 2, **dadurch gekennzeichnet, daß** Folie (17) und Träger (16) randseitig fest verbunden sind.

4. Projektionsschirm nach einem der Ansprüche 2 oder 3, **dadurch gekennzeichnet, dass** die Stützflächen der Stützstellenstruktur (20) mit der Folie (17) und/oder dem Träger (16) fest verbunden sind.

5. Projektionsschirm nach einem der Ansprüche 3 oder 4, **dadurch gekennzeichnet, daß** die Verbindung mittels eines transparenten Klebers vorgenommen ist.

6. Projektionsschirm nach einem der Ansprüche 1 - 5, **dadurch gekennzeichnet, daß** die Stützstellenstruktur (20) mittels kleiner, transparenter Kugeln (21) realisiert ist, die über die einander zugekehrten Flächen von Folie (17) und Träger (16) angeordnet sind und die Folie (17) am Träger (16) abstützen.

7. Projektionsschirm nach Anspruch 6, **dadurch gekennzeichnet, daß** die Kugeln (21) in einer auf dem Träger (16) oder auf der Folie (17) aufgetragenen Lackschicht (22) aus transparentem Lack festgelegt sind und daß die Dicke der Lackschicht (22) kleiner ist als der Durchmesser der Kugeln (21).

8. Projektionsschirm nach einem der Ansprüche 1 - 7, **dadurch gekennzeichnet, daß** die Folie (17) thermoplastisch verformbar ist.

## Claims

1. Projection screen for image projection, having a transparent support (16), which fixes the screen geometry, and having a light-scattering layer which covers at least a projection area (14) defined within the screen geometry, wherein the light-scattering layer is in the form of a coating (18) of a very thin, transparent film (17), **characterized in that** the film (17) is attached to the support via an optically transparent supporting point structure (20) which forms an air gap (19) between the support (16) and the film (17) wherein at least the film (17), preferably the film (17) and the support (16) rests or rest on the supporting point structure at points, by which the film (17) is attached to the support (16) such that the support (16) has no optical feedback, or only minor optical feedback to the coating (18) by optical decoupling.

2. Projection screen according to Claim 1, **characterized in that** the supporting point structure (20) is designed such that the ratio of the sum of its supporting areas to the sum of the free areas which remain in between is less than 5%.

3. Projection screen according to Claim 2, **characterized in that** the film (17) and the support (16) are firmly connected at the edge.

4. Projection screen according to one of Claims 2 or 3, **characterized in that** the supporting areas of the supporting point structure (20) are firmly connected to the film (17) and/or to the support (16).

5. Projection screen according to one of Claims 3 or 4, **characterized in that** the connection is provided by means of a transparent adhesive.

6. Projection screen according to one of Claims 1 - 5, **characterized in that** the supporting point structure (20) is provided by means of small, transparent balls (21), which are arranged over the mutually facing surfaces of the film (17) and the support (16), and support the film (17) on the support (16).

7. Projection screen according to Claim 6, **characterized in that** the balls (21) are fixed in a lacquer layer (22), which is applied to the support (16) or to the film (17) and is composed of transparent lacquer, and **in that** the thickness of the lacquer layer (22) is less than the diameter of the balls (21).

8. Projection screen according to one of Claims 1 - 7, **characterized in that** the film (17) is thermoplastically deformable.

## Revendications

1. Ecran de projection d'image, doté d'un support transparent (16) qui définit la géométrie de l'écran et d'une couche de diffusion de lumière qui recouvre au moins une surface de projection (14) définie à l'intérieur de la géométrie de l'écran, la couche de diffusion de lumière étant réalisée sous la forme d'un revêtement (18) par une feuille transparente (17) très mince,
**caractérisé en ce que**
la feuille (17) est fixée sur le support par l'intermédiaire d'une structure de soutien (20) optiquement transparente qui forme un interstice (19) entre le support (16) et la feuille (17) et
**en ce qu'**au moins la feuille (17) et de préférence la feuille (17) et le support (16) reposent ponctuellement sur la structure de support, grâce à quoi la feuille (17) est fixée sur le support (16) de telle sorte que par découplage optique, le support (16) ne présente pas de rétroaction optique ou une rétroaction optique légère sur le revêtement (18).

2. Ecran de projection selon la revendication 1, **caractérisé en ce que** la structure de support (20) est configurée de telle sorte que le rapport entre la somme de ses surfaces de support et la somme des surfaces libres qui restent entre ces dernières est inférieure à 5 %.

3. Ecran de projection selon la revendication 2, **caractérisé en ce que** la feuille (17) et le support (16) sont reliés solidairement par leurs bords.

4. Ecran de projection selon l'une des revendications 2 ou 3, **caractérisé en ce que** les surfaces de support de la structure (20) de support sont reliées solidairement à la feuille (17) et/ou au support (16).

5. Ecran de projection selon l'une des revendications 3 ou 4, **caractérisé en ce que** la liaison est établie au moyen d'un adhésif transparent.

6. Ecran de projection selon l'une des revendications 1 à 5, **caractérisé en ce que** la structure de support (20) est réalisée au moyen de petites billes transparentes (21) qui sont disposées sur les surfaces tournées l'une vers l'autre de la feuille (17) et du support (16) et qui soutiennent la feuille (17) sur le support (16).

7. Ecran de projection selon la revendication 6, **caractérisé en ce que** les billes (21) sont fixées sur une couche (22) de vernis transparent appliquée sur le support (16) ou sur la feuille (17) et **en ce que** l'épaisseur de la couche de vernis (22) est inférieure au diamètre des billes (21).

8. Ecran de projection selon l'une des revendications 1 à 7, **caractérisé en ce que** la feuille (17) est thermoplastiquement déformable.
